# EUROPEAN PATENT SPECIFICATION

(11) **EP 0 394 331 B1**
(45) Date of publication and mention of the grant of the patent: **25.08.1993**
(21) Application number: 89900938.5
(22) Date of filing: 27.12.1988
(51) Int. Cl.: B65G 15/60, B65G 21/10

(54) **HINGE ARRANGEMENT FOR BELT CONVEYOR**
SCHARNIERANORDNUNG FÜR FÖRDERBAND
AGENCEMENT D'ARTICULATION POUR CONVOYEUR A BANDE

(30) Priority: 29.12.1987 SE 8705174
(43) Date of publication of application: 31.10.1990
(73) Proprietor: SCANIAINVENTOR CONVEYOR SICON AB, S-250 16 Helsingborg (SE)
(72) Inventor: JOHANSSON, Robert, S-260 40 Viken (SE)
(74) Representative: Berglund, Gustav Arthur
(86) International application number: SE8800704
(87) International publication number: WO8906212

(56) References cited:
- EP-A- 0 172 027
- FR-A- 2 187 639
- SE-B- 426 473

## Description

The present invention relates generally to belt conveyors and specifically to a hinge arrangement for a belt conveyor of the type having an endless conveyor belt which at least along a goods conveying reach is supported by rollers via two elements arranged along the side edges of said belt and taking up the pulling power, said hinge arrangement comprising two upper rollers between which the belt passes in a first direction, and two lower rollers between which the belt passes in a return direction opposing said first direction.

Conveyors having conveyor belts of the above-mentioned type are disclosed in e.g. Swedish Patent Applications 8505793-3 and 7809688-0. Such conveyors are convenient since they are compact and allow fully enclosed conveyance, which is important for many types of bulk goods.

GB-A-2 079 234 discloses a hinge arrangement for a belt conveyor of the kind referred to within the preamble of claim 1. However, in this hinge arrangement the reach of the conveyor belt will change materially during relative pivoting of different parts of the conveyor.

The object of the present invention is to further improve this type of belt conveyor by making different parts of the conveyor pivotable relative to each other in at least one plane in such a way that the reach of the conveyor belt does not change materially during the relative pivoting of the different parts, since such a change of the reach would necessitate using a complicated belt tensioning device.

According to the invention, this object is achieved in that the belt passing in the return direction intersects the belt passing in the first direction and in that a first one of said upper rollers and a first one of said lower rollers have a substantially common axis of rotation which is also the hinge axis for a pivoting movement of a first belt conveyor part positioned on one side of said hinge arrangement, relative to a second belt conveyor part positioned on the opposite side of said hinge arrangement, in a plane extending substantially at right angles to the hinge axis, the second one of the upper rollers and the second one of the lower rollers being mounted at an end of said second belt conveyor part.

In cases where the hinge arrangement need be pivot-able through a limited angle only, also the second one of the upper rollers and the second one of the lower rollers can have a common axis of rotation.

When the belt conveyor demands a greater pivot angle of the hinge arrangement, the second one of the upper rollers and the second one of the lower rollers can have separate and substantially parallel axes of rotation, and said first and second rollers can be located each on one side of a tangent plane of the second rollers. In this case, the first part of the belt conveyor can be made tiltable in a plane extending substantially at right angles to the plane of the pivoting movement, by means of a tilt shaft extending at right angles to the axes of rotation of the rollers and positioned preferably between the first rollers and the second rollers. As a result, the first part of the belt conveyor, together with the first rollers, will be tiltable relative to the second part of the belt conveyor and the second rollers.

In a first embodiment, the axes of rotation of the second rollers are substantially equidistantly spaced from the substantially common axis of rotation of the first rollers. In this case, a third upper roller and a third lower roller having a substantially common axis of rotation can be arranged on the opposite side of the tangent plane relative to the first rollers.

In a second embodiment, the two second rollers can be spaced widely apart, and the first rollers can be reciprocatable between the second rollers.

A belt conveyor of the type mentioned by way of introduction may comprise a single hinge arrangement according to the invention, in which case for example the first part of the belt conveyor can be a pivotable and preferably cantilever type arm, from the free end of which the conveyed goods can be unloaded along a circular arc. The free end of the arm can be provided with further means for increasing the useful unloading area. Several hinge arrangements can also be included in a belt conveyor, whereby e.g. the free end of the above-mentioned arm can be made to cover a far greater area.

The invention will now be described in detail with reference to the accompanying drawings.

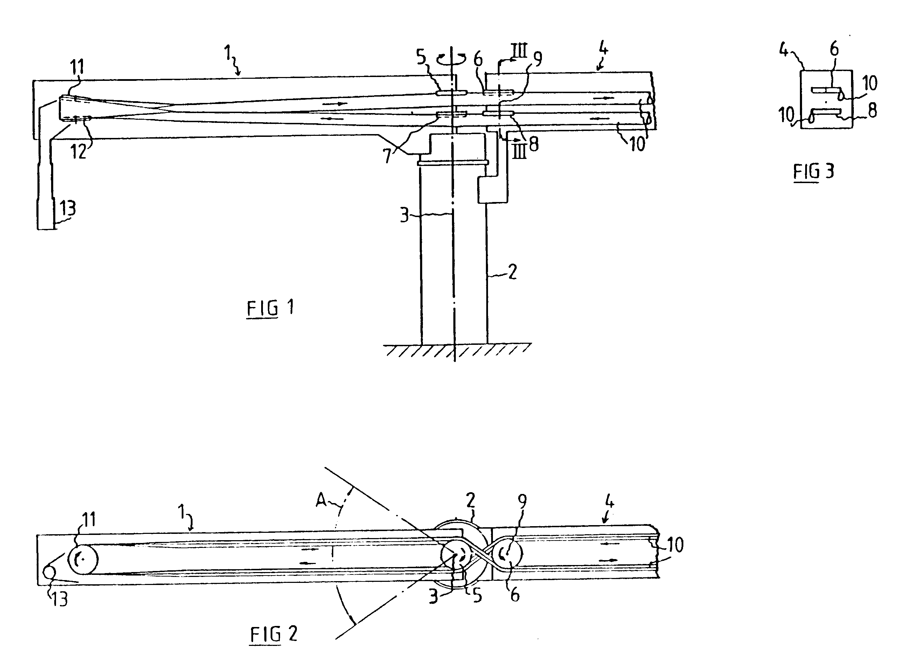

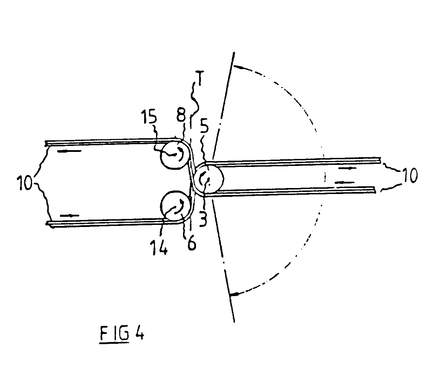

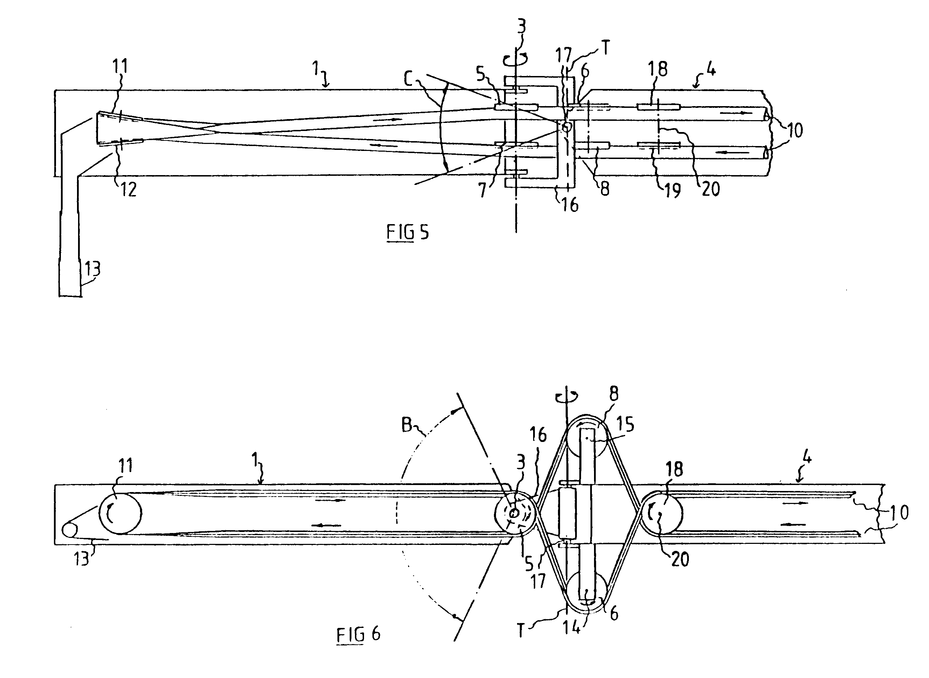

Figs. 1 and 2 are a side view and a plan view, respectively, of a first embodiment of a belt conveyor comprising the hinge arrangement according to the present invention. Fig. 3 is a cross-sectional view along line III-III in Fig. 1. Fig. 4 is plan view which schematically shows a second embodiment of the hinge arrangement according to the invention. Figs. 5 and 6 are a side view and a plan view, respectively, of a practical embodiment of the hinge arrangement in Fig. 4.

The inventive hinge arrangement is intended for belt conveyors having an endless conveyor belt which comprises two elements arranged along the side edges of the belt and taking up the pulling power, said elements being integrated with the belt which, between said elements, comprises a flexible intermediate portion. The cross-sectional form of the pulling power take-up elements preferably is that of a truncated wedge. The conveyor belt is further, via the pulling power take-up elements, supported by rollers which are rotatably mounted in spaced-apart stands. The rollers preferably are disc-shaped and have a profile matching the profile of the pulling power take-up elements. At least along a goods conveying reach, the pulling power take-up elements are supported adjacent one another, such that the conveyor belt becomes tubular in cross-section.

The belt conveyor shown in Figs. 1-3 comprises a first part 1 in the form of a cantilever arm pivotably mounted in a stand 2. The arm 1 is, more precisely, pivotable about a pivot axis 3. The belt conveyor comprises a second part 4 whose one end is fixedly mounted in the stand 2. Two upper rollers 5, 6 and two lower rollers 7, 8 are mounted in the stand 2. The rollers 5 and 7 are rotatable about the same axis of rotation which besides coincides with the pivot axis 3. The rollers 6 and 8 are rotatable about one and the same axis of rotation 9.

A conveyor belt 10 of the type described above passes the rollers 5-8 in the following manner. The belt 10 reaches the roller 8 from the belt conveyor part 4 and passes from the roller 8 to the roller 7 from which the belt 10 moves towards two terminal rollers 11, 12 at the free end of the arm 1. From the terminal rollers 11, 12, the belt is conducted to the roller 5 and from there over the roller 6 back into the conveyor part 4. Thus, the conveyor belt 10 passes the hinge arrangement in a lower plane where the rollers 7 and 8 are positioned, from the conveyor part 4 to the arm 1, and passes it in an upper plane where the rollers 5 and 6 are positioned, from the arm 1 to the conveyor part 4, i.e. in the return direction.

When passing over the rollers 5-8, the pulling power take-up elements are positioned adjacent one another, while, when the belt 10 passes over the terminal rollers 11, 12, one pulling power take-up element passes around the roller 11, and the other pulling power take-up element passes around the roller 12. As a result, the closed conveyor tube formed along the major part of the goods conveying reach by the belt 10, is opened immediately before the rollers 11, 12, such that the goods conveyed by the conveyor belt 10 are thrown out from the belt 10 in the travelling direction thereof between the rollers 7 and 12. The thrown-out goods is collected at the free end of the arm 1 in a vertical chute 13 which is extensible downwards in a telescoping manner.

It appears from Fig. 2 that, when the arm 1 is pivoted about the pivot axis 3, the change of the angle of belt contact around the roller 5 is compensated for by an opposed change of its angle of contact around the roller 7. The total reach of the conveyor belt 10 thus is unchanged, as long as the belt 10 engages both the roller 5 and the roller 7. However, this restricts the pivot angle of the arm 1 to the angle A shown in Fig. 2.

To increase the relative pivot angle between the belt conveyor parts which are pivotable relative to each other by a hinge arrangement according to the invention, the rollers 6 and 8 can be positioned relative to the rollers 5 and 7 in the manner which is shown in principle in Fig. 4. In Fig. 4, the rollers 6 and 8 thus have separate, but substantially parallel axes of rotation 14 and 15, respectively. Moreover, the rollers 6 and 8 are positioned relative to the rollers 5 and 7, such that a tangent plane T of the rollers 6 and 8 is touched from the opposite side by the rollers 5 and 7. In Fig. 4, the distance from the roller 6 to the roller 5 is substantially the same as the distance from the roller 8 to the roller 7, but it will be appreciated that these distances need not be identical. By arranging the rollers 6 and 8 in a widely spaced-apart relationship, the arm 1 can be made both pivotable and translatable. This is achieved in that the rollers 5 and 7 are caused to move together in a reciprocating fashion between the rollers 6 and 8, at the same time as the pivotability of the arm 1 around the axis of rotation 3 of the rollers 5 and 7 is maintained.

Figs. 5 and 6 illustrate a practical embodiment of the hinge arrangement in Fig. 4. In Figs. 5 and 6, the same reference numerals are used as in Figs. 1-4, where applicable. In this case, the rollers 5 and 7 have their axis of rotation 3 fixed relative to a U-shaped yoke 16 which, in turn, is tiltable about a horizontal shaft 17 relative to the stationary belt conveyor part 4. In contrast to the embodiment in Fig. 4, the rollers 5 and 7 are spaced from the tangent plane T of the rollers 6 and 8. This facilitates centering of the tilt shaft 17 between the rollers 6 and 8. In order to bring the runs of the belt 10 together in the belt conveyor part 4, a third upper roller 18 and a third lower roller 19 are provided which have a substantially common axis of rotation 20 in the end of the belt conveyor part 4 closest to the hinge arrangement. The rollers 18, 19 are, more precisely, positioned on the opposite side of said tangent plane T, as compared to the rollers 5 and 7.

The embodiment of the hinge arrangement according to the invention shown in Figs. 5 and 6 imparts to the belt conveyor a high degree of mobility of the free end of the arm 1. Thus, the arm 1 is pivotable through an angle B in the horizontal plane relative to the conveyor part 4, the angle B being greater than the angle A. Moreover, the arm 1 is tiltable through an angle C relative to the conveyor part 4. This mobility can be further increased in that the belt conveyor is provided with two or more hinge arrangements, which means that also one or more of the stands supporting the hinge arrangements must be movable in a horizontal plane.

A variety of modifications of the embodiments described above are conceivable within the scope of the invention, and only where the design of the belt conveyor is concerned is the invention restricted to the scope defined by the appended claims.

## Claims

1. A hinge arrangement for a belt conveyor comprising an endless conveyor belt (10) which at least along a goods conveyor reach is supported by rollers via two elements arranged along the side edges of said belt and taking up the pulling power, said hinge arrangement comprising two upper deflecting rollers (5, 6) between which said belt (10) passes in a first direction, and two lower rollers (7, 8) between which said belt passes in a return direction opposing said first direction, **characterised** in that the belt (10) passing in the return direction intersects the belt (10) passing in said first direction and in that a first one (5) of said upper rollers (5, 6) and a first one (7) of said lower rollers (7, 8) have a substantially common axis of rotation (3) which is also the hinge axis for a pivoting movement of a first belt conveyor part (1) positioned on one side of said hinge arrangement, relative to a second belt conveyor part (4) positioned on the opposite side of said hinge arrangement, in a plane extending substantially at right angles to said hinge axis, the second one (6) of the upper rollers and the second one (8) of the lower rollers being mounted at an end of said second belt conveyor part (4).

2. The hinge arrangement as claimed in claim 1, **characterised** in that also the second one (6) of the upper rollers and the second one (8) of the lower rollers have a common axis of rotation (9).

3. The hinge arrangement as claimed in claim 1, **characterised** in that the second one (6) of the upper rollers and the second one (8) of the lower rollers have separate and substantially parallel axes of rotation (14, 15), and that said first rollers (5, 7) and said second rollers (6, 8) are located each on one side of a tangent plane (T) of said second rollers (6, 8).

4. The hinge arrangement as claimed in claim 3, **characterised** in that said first rollers (5, 7) and said first part (1) of the belt conveyor are tiltable relative to the second rollers (6, 8) and the second part (4) of the belt conveyor about a tilt shaft (17) extending at right angles to the axes of rotation (3, 14, 15) of said rollers.

5. The hinge arrangement as claimed in claim 3 or 4, **characterised** in that the axes of rotation (14, 15) of the second rollers (6, 8) are substantially equidistantly spaced from the substantially common axis of rotation (3) of said first rollers (5, 7).

6. The hinge arrangement as claimed in claim 5, **characterised** by a third upper roller (18) and a third lower roller (19) having a substantially common axis of rotation (20) and positioned on the opposite side of said tangent plane (T) relative to said first rollers (5, 7).

7. The hinge arrangement as claimed in claim 3 or 4, **characterised** in that said second rollers (6, 8) are spaced widely apart, and that said first rollers (5, 7) are reciprocatable between the second rollers.

8. The hinge arrangement as claimed in any one of claims 1-7, **characterised** in that it constitutes one of several hinge arrangements of said belt conveyor.

9. The hinge arrangement as claimed in claim 4, **characterised** in that said tilt shaft (17) extends essentially in said tangent plane (T).

## Patentansprüche

1. Scharnieranordnung für einen Bandförderer umfassend ein endloses Förderband (10), das zumindest längs einer Materialförderstrecke über zwei längs der Bandseitenkanten angeordnete, zugkraftaufnehmende Elemente von Rollen abgestützt ist, wobei die Scharnieranordnung zwei obere Umlenkrollen (5, 6), zwischen denen das genannte Band (10) in einer ersten Richtung läuft, und zwei untere Rollen (7, 8) umfasst, zwischen denen das Band in einer der genannten ersten Richtung entgegengesetzten Rücklaufrichtung läuft, dadurch **gekennzeichnet**, dass das in der Rücklaufrichtung laufende Band (10) das in der genannten ersten Richtung laufende Band (10) kreuzt, und dass eine erste Rolle (5) der oberen Rollen (5, 6) und eine erste Rolle (7) der unteren Rollen (7, 8) eine hauptsächlich gemeinsame Drehachse (3) haben, die auch die Gelenkachse für eine Schwenkbewegung eines auf der einen Seite der Scharnieranordnung angebrachten, ersten Bandförderteils (1) im Verhältnis zu einem auf der entgegengesetzten Seite der Scharnieranordnung angebrachten, zweiten Bandförderteil (4) darstellt, und zwar in einer sich hauptsächlich rechtwinklig zur genannten Gelenkachse erstreckenden Ebene, wobei die zweite Rolle (6) der oberen Rollen und die zweite Rolle (8) der unteren Rollen an einem Ende des zweiten Bandförderteils (4) angebracht sind.

2. Scharnieranordnung nach Anspruch 1, dadurch **gekennzeichnet**, dass auch die zweite Rolle (6) der oberen Rollen und die zweite Rolle (8) der unteren Rollen eine gemeinsame Drehachse (9) haben.

3. Scharnieranordnung nach Anspruch 1, dadurch **gekennzeichnet**, dass die zweite Rolle (6) der oberen Rollen und die zweite Rolle (8) der unteren Rollen getrennte und hauptsächlich parallele Drehachsen (14, 15) haben, und dass sich die ersten Rollen (5, 7) und die zweiten Rollen (6, 8) auf je einer Seite einer Tangentialebene (T) der zweiten Rollen (6, 8) befinden.

4. Scharnieranordnung nach Anspruch 3, dadurch **gekennzeichnet**, dass die ersten Rollen (5, 7) und der erste Teil (1) des Bandförderers im Verhältnis zu den zweiten Rollen (6, 8) kippbar sind, und der zweite Teil (4) des Bandförderers um eine rechtwinklig zu den Drehachsen (3, 14, 15) der genannten Rollen sich erstreckende Kippachse (17) kippbar ist.

5. Scharnieranordnung nach Anspruch 3 oder 4, dadurch **gekennzeichnet**, dass die Drehachsen (14, 15) der zweiten Rollen (6, 8) in einem im wesentlichen gleichen Abstand von der hauptsächlich gemeinsamen Drehachse (3) der genannten ersten Rollen (5, 7) liegen.

6. Scharnieranordnung nach Anspruch 5, **gekennzeichnet** durch eine dritte obere Rolle (18) und eine dritte untere Rolle (19), die eine hauptsächlich gemeinsame Drehachse (20) haben und auf der zu den genannten ersten Rollen (5, 7) entgegengesetzten Seite der Tangentialebene (T) angebracht sind.

7. Scharnieranordnung nach Anspruch 3 oder 4, dadurch **gekennzeichnet**, dass sich die genannten zweiten Rollen (6, 8) in grossem Abstand voneinander befinden, und dass die genannten ersten Rollen (5, 7) zwischen den zweiten Rollen hin und her beweglich sind.

8. Scharnieranordnung nach einem der Ansprüche 1-7, dadurch **gekennzeichnet**, dass sie eine von mehreren Scharnieranordnungen des Bandförderers ausmacht.

9. Scharnieranordnung nach Anspruch 4, dadurch **gekennzeichnet**, dass sich die Kippachse (17) hauptsächlich in der Tangentialebene (T) erstreckt.

## Revendications

1. Ensemble d'articulation destiné à un transporteur à courroie qui comporte une courroie transporteuse (10) sans fin ayant au moins un brin de transporteur de marchandises supporté par des rouleaux par l'intermédiaire de deux éléments placés le long des bords de la courroie et encaissant la force de traction, l'ensemble d'articulation comprenant deux rouleaux supérieurs déflecteurs (5, 6) entre lesquels passe la courroie (10) dans un premier sens, et deux rouleaux inférieurs (7, 8) entre lesquels passe la courroie dans un sens de retour opposé au premier sens, caractérisé en ce que la courroie (10) passant dans le sens de retour recoupe la courroie (10) passant dans le premier sens et en ce qu'un premier (5) des rouleaux supérieurs (5, 6) et un premier (7) des rouleaux inférieurs (7, 8) ont un axe sensiblement commun de rotation (3) qui est aussi l'axe d'articulation d'un mouvement de pivotement d'une première partie (1) de transporteur à courroie placée d'un premier côté de l'ensemble d'articulation, par rapport à une seconde partie (4) de transporteur à courroie placée du côté opposé de l'ensemble d'articulation, dans un plan sensiblement perpendiculaire à l'axe d'articulation, le second (6) des rouleaux supérieurs et le second (8) des rouleaux inférieurs étant montés à une extrémité de la seconde partie (4) de transporteur à courroie.

2. Ensemble d'articulation selon la revendication 1, caractérisé en ce que le second (6) des rouleaux supérieurs et le second (8) des rouleaux inférieurs ont aussi un axe commun de rotation (9).

3. Ensemble d'articulation selon la revendication 1, caractérisé en ce que le second (6) des rouleaux supérieurs et le second (8) des rouleaux inférieurs ont des axes séparés et sensiblement parallèles de rotation (14, 15) et en ce que les premiers rouleaux (5, 7) et les seconds rouleaux (6, 8) sont placés chacun d'un côté d'un plan tangent (T) des seconds rouleaux (6, 8).

4. Ensemble d'articulation selon la revendication 3, caractérisé en ce que les premiers rouleaux (5, 7) et la première partie (1) du transporteur à courroie peuvent pivoter par rapport aux seconds rouleaux (6, 8) et à la seconde partie (4) du transporteur à courroie autour d'un arbre (17) de basculement qui est perpendiculaire aux axes de rotation (3, 14, 15) des rouleaux.

5. Ensemble d'articulation selon la revendication 3 ou 4, caractérisé en ce que les axes de rotation (14, 15) des seconds rouleaux (6, 8) sont pratiquement équidistants de l'axe sensiblement commun de rotation (3) des premiers rouleaux (5, 7).

6. Ensemble d'articulation selon la revendication 5, caractérisé par un troisième rouleau supérieur (18) et un troisième rouleau inférieur (19) ayant un axe sensiblement commun de rotation (20) et disposés du côté du plan tangent (T) opposé à celui des premiers rouleaux (5, 7).

7. Ensemble d'articulation selon la revendication 3 ou 4, caractérisé en ce que les seconds rouleaux (6, 8) sont très espacés, et les premiers rouleaux (5, 7) sont mobiles de manière alternative entre les seconds rouleaux.

8. Ensemble d'articulation selon l'une quelconque des revendications 1 à 7, caractérisé en ce qu'il constitue l'un de plusieurs ensembles d'articulation du transporteur à courroie.

9. Ensemble d'articulation selon la revendication 4, caractérisé en ce que l'arbre de basculement (17) est disposé essentiellement dans le plan tangent (T).
